# EUROPEAN PATENT APPLICATION

(11) **EP 4 194 311 A1**
(43) Date of publication of application: **14.06.2023**
(21) Application number: 20953727.3
(22) Date of filing: 18.09.2020
(51) Int. Cl.: B61L 5/06

(54) **FAULT PREDICTION METHOD AND APPARATUS, MODEL DEPLOYMENT METHOD AND APPARATUS, ELECTRONIC DEVICE, AND STORAGE MEDIUM**

(71) Applicant: Siemens Mobility GmbH, 81739 München (DE)
(72) Inventor: ZHU, Jiaxing, Wuxi, Jiangsu 214131 (CN); BOVENSIEPEN, Daniel, Beijing 100102 (CN); GAN, Shanshan, Wuxi, Jiangsu 214122 (CN); WU, Weiqing, Suzhou, Jiangsu 215028 (CN); WANG, Peipei, Wuxi Jiangsu 214000 (CN); WU, Tengfei, Nanjing, Jiangsu 210000 (CN)
(74) Representative: Isarpatent
(86) International application number: PCT/CN2020/116305
(87) International publication number: WO 2022/056869

(57) **Abstract**

Embodiments of the present invention provide a fault prediction method, being applied to the edge collection end of a switch machine monitoring system. The fault prediction method comprises: deploying a fault type prediction model that is obtained from the service end of the switch machine monitoring system, wherein the fault type prediction module performs training on the basis of training samples, and the training samples comprise the current data of a switch machine collected by the edge collection edge, and a fault type classification tag corresponding to the switch machine; and according to the fault type prediction model, performing edge computing on the collected current data of the switch machine so as to obtain the fault type prediction data of the switch machine. The embodiments of the present invention improve fault prediction efficiency by using the fault type prediction model, and avoid the heavy workload of manually detecting a fault of the switch machine.

## Description

### Technical Field

The present invention relates to the technical field of industrial control, and in particular to a fault prediction method, a fault prediction apparatus, a model deployment method, a model deployment apparatus, an electronic device, and a storage medium.

### Background Art

As the high-speed railway network is quickly deployed, requirements for the safety of various devices in the whole network are also raised. For example, among a number of key devices, switch machines play an important role in the safe operation of railways. Switch machine monitoring systems are built for the rail management system, and the switch machines on railways are maintained through manual troubleshooting.

There is a prior art intelligent system for monitoring operating currents of switch machines, and the intelligent system reduces the workload of manually inspecting switch machines. However, the troubleshooting accuracy of the intelligent system is not high. In addition, the intelligent system often incorrectly sends out error messages, and a signaler needs to examine and process all error messages. Thus, the workload of processing error messages is increased.

### Summary of the Invention

To at least partially solve the above-mentioned problems, embodiments of the present invention provide a fault prediction method, a fault prediction apparatus, a model deployment method and apparatus, an electronic device, and a storage medium.

In a first aspect, embodiments of the present invention provide a fault prediction method, and the method is applied to an edge collection end of a switch machine monitoring system. The fault prediction method comprises: deploying a fault type prediction model acquired from the service end of the switch machine monitoring system, wherein the fault type prediction model is trained based on training samples, and the training samples comprise switch machine current data collected by the edge collection end and corresponding fault type classification tags of the switch machine; performing edge computing for the collected switch machine current data based on the fault type prediction model to obtain fault type prediction data of the switch machine.

Since the training samples for training the fault type prediction model at the service end comprise the switch machine current data collected by the edge collection end, the deployment of the fault type prediction model at the edge collection end improves the prediction accuracy of the fault type prediction model through closed-loop data flows. In addition, the utilization of the fault type prediction model improves the fault prediction efficiency and avoids the heavy workload that would be required in manually troubleshooting the switch machine.

Furthermore, since the fault type prediction model is trained at the service end and is deployed at the edge collection end, separation of model training from model prediction is realized and the management efficiency of the model is improved. Moreover, the deployment of the fault type prediction model at the edge collection end improves the efficiency of edge data processing and saves the communication cost such as bandwidth, compared with non-edge data processing.

In another implementation mode of the present invention, the method further comprises: sending the collected switch machine current data and the fault type prediction data to a workstation so that the workstation classifies the fault type according to the fault type prediction data and sends updated training samples to the service end.

Since the workstation classifies the fault type according to the fault type prediction data and supplies the fault type to the service end, the updating of training samples is realized by using the workstation as an external interface of the service end and the edge collection end, while independent processing of the service end and the edge collection end is guaranteed.

In another implementation mode of the present invention, deploying a fault type prediction model acquired from the service end of the switch machine monitoring system comprises: deploying an updated fault type prediction model acquired from the service end of the switch machine monitoring system. The updated fault type prediction model is trained based on updated training samples.

Since the updated fault type prediction model is trained based on updated training samples and the updated fault type prediction model is deployed at the edge collection end, the prediction accuracy of the fault type prediction model is improved.

In another implementation mode of embodiments of the present invention, performing edge computing for the collected switch machine current data based on the fault type prediction model to obtain fault type prediction data of the switch machine comprises: performing computing processing for the collected switch machine current data in a preset sampling period based on a sampling starting signal and a sampling ending signal to obtain digital current data; inputting the digital current data into the fault type prediction model to perform one-dimensional convolutional neural network edge computing to obtain fault type prediction data of the switch machine.

Since the collection of the switch machine current data in a preset sampling period is realized based on a sampling staring signal and a sampling ending signal, the data sampling efficiency is improved.

In another implementation mode of embodiments of the present invention, performing computing processing for the collected switch machine current data in a preset sampling period based on a sampling starting signal and a sampling ending signal to obtain digital current data comprises: starting the computing processing for the collected switch machine current data if a sampling starting signal is received; finishing the computing processing for the collected switch machine current data if a sampling ending signal is received or no sampling ending signal is received within a maximum sampling time period.

Since computing processing for the collected switch machine current data is finished when a sampling ending signal is received or no sampling ending signal is received within a maximum sampling time period, the sampling efficiency is improved.

In another implementation mode of embodiments of the present invention, if the time interval between the sampling starting signal and the sampling ending signal is less than the maximum sampling time period, a zero value is filled in the remaining time sequences.

Since a zero value is filled in the remaining time sequences between the time interval and the maximum sampling time period, the communication resource of sampling signals is saved while the sampling reliability is guaranteed.

In another implementation mode of embodiments of the present invention, inputting the digital current data into the fault type prediction model to perform edge computing to obtain fault type prediction data of the switch machine comprises: classifying channel configurations for the digital current data according to the type of the switch machine to obtain at least one piece of channel digital current data; classifying channel configurations for the fault type prediction model according to the type of the corresponding switch machine to obtain at least one channel fault type prediction model; matching the at least one piece of channel digital current data to the at least one channel fault type prediction model to perform one-dimensional convolutional neural network edge computing to obtain fault type prediction data of the switch machine.

Since at least one piece of channel digital current data matches at least one channel fault type prediction model, the efficiency and accuracy of fault prediction processing of channel digital current data by using a fault type prediction model are improved.

In another implementation mode of embodiments of the present invention, the type of the switch machine is a type classified according to the device parameters of the switch machine.

Since the type classified according to device parameters of the switch machine is a channel configuration type and the device parameters are highly associated with the fault prediction result, the efficiency of channel configurations is improved.

In a second aspect, embodiments of the present invention provide a model deployment method, the method being executed by the service end of a switch machine monitoring system. The model deployment method comprises: acquiring training samples, wherein the training samples comprise switch machine current data collected by the edge collection end of the switch machine monitoring system and corresponding fault type classification tags of the switch machine; performing classification training based on the training samples to obtain a fault type prediction model; sending the fault type prediction model to the edge collection end to perform a fault type prediction model deployment.

Since the training samples for training the fault type prediction model at the service end comprise switch machine current data collected by the edge collection end, the deployment of the fault type prediction model at the edge collection end improves the prediction accuracy of the fault type prediction model through closed-loop data flows. In addition, the utilization of the fault type prediction model improves the fault prediction efficiency and avoids the heavy workload that would be required if troubleshooting is performed manually.

In a third aspect, embodiments of the present invention provide an electronic device and the electronic device comprises one or more processing units, a communication interface, a memory and a communication bus, and one or more programs. The one or more processing units, the communication interface and the memory realize communication among them over the communication bus, and the one or more programs are stored in the memory and are configured to be executed by the one or more processing units to execute the method described in the first aspect or the second aspect.

Since the training samples for training the fault type prediction model at the service end comprise the switch machine current data at the edge collection end, the deployment of the fault type prediction model or the updating of the existing fault type prediction model deployment at the edge collection end improves the prediction accuracy of the fault type prediction model through closed-loop data flows. In addition, the utilization of the fault type prediction model improves the fault prediction efficiency and avoids the heavy workload that would be required if troubleshooting is performed manually.

In a fourth aspect, embodiments of the present invention provide a model deployment apparatus, which is configured at the service end of a switch machine monitoring system, and the model deployment apparatus comprises a sample acquisition module, a model training module, and a model sending module. The sample acquisition module acquires training samples, and the training samples comprise switch machine current data collected by the edge collection end of the switch machine monitoring system and corresponding fault type classification tags of the switch machine. The model training module performs classification training based on the training samples to obtain a fault type prediction model. The model sending module sends the fault type prediction model to the edge collection end to perform a fault type prediction model deployment.

Since the training samples for training the fault type prediction model at the service end comprise the switch machine current data collected by the edge collection end, the deployment of the fault type prediction model at the edge collection end improves the prediction accuracy of the fault type prediction model through closed-loop data flows. In addition, the utilization of the fault type prediction model improves the fault prediction efficiency and avoids the heavy workload that would be required if troubleshooting is performed manually.

In a fifth aspect, embodiments of the present invention provide a fault prediction apparatus, which is configured at the edge collection end of a switch machine monitoring system, and the fault prediction apparatus comprises a model deployment module and a prediction module. The model deployment module deploys a fault type prediction model acquired from the service end of the switch machine monitoring system. The fault type prediction model is trained based on training samples, and the training samples comprise the switch machine current data collected by the edge collection end and corresponding fault type classification tags of the switch machine. The prediction module performs edge computing for the collected switch machine current data based on the fault type prediction model to obtain fault type prediction data of the switch machine.

Since the training samples for training the fault type prediction model at the service end comprise the switch machine current data collected by the edge collection end, the deployment of the fault type prediction model at the edge collection end improves the prediction accuracy of the fault type prediction model through closed-loop data flows. In addition, the utilization of the fault type prediction model improves the fault prediction efficiency and avoids heavy workload of manually troubleshooting a switch machine.

In a sixth aspect, embodiments of the present invention provide a storage medium and the storage medium contains a stored program. The program controls the execution of the method described in the first aspect or second aspect by the device comprising the storage medium when running.

In a seventh aspect, embodiments of the present invention provide a computer program product, the computer program product is tangibly stored in a computer-readable medium and comprises computer-executable instructions, and the computer-executable instructions allow at least one processing unit to execute the method described in the first aspect or the second aspect when executed.

### Brief Description of the Drawings

The following figures are only used to give an exemplary description and explanation of the present invention, but are not used to limit the scope of the present invention. In the figures,
Fig. 1 shows the architecture of a switch machine monitoring system involved in one embodiment of related technology;
Fig. 2A shows another architecture of a switch machine monitoring system involved in one embodiment of the present invention;
Fig. 2B is a flowchart of the model deployment method provided by another embodiment of the present invention;
Fig. 3 is a flowchart of the fault prediction method provided by another embodiment of the present invention;
Fig. 4A is a flowchart of the model deployment method provided by another embodiment of the present invention;
Fig. 4B is a flowchart of the model deployment method provided by another embodiment of the present invention;
Fig. 4C is a flowchart of the model deployment method provided by another embodiment of the present invention;
Fig. 5 is a flowchart of the mapping method provided by another embodiment of the present invention;
Fig. 6 is a schematic block diagram of the model deployment apparatus provided by another embodiment of the present invention;
Fig. 7 is a schematic block diagram of the fault prediction apparatus provided by another embodiment of the present invention;
Fig. 8 shows the structure of one electronic device provided by embodiments of the present invention;
Fig. 9 shows the structure of another electronic device provided by embodiments of the present invention.

### Description of reference numerals in the drawings:

100, 1000: service ends; 200, 2000: edge collection ends; 300, 3000: first workstations; 400, 4000: second workstations;
S210: acquire training samples, the training samples comprising switch machine current data collected by an edge collection end of a switch machine monitoring system and corresponding fault type classification tags of the switch machine;
S220: perform classification training based on the training samples to obtain a fault type prediction model;
S230: send the fault type prediction model to the edge collection end to perform a fault type prediction model deployment;
S310: deploy a fault type prediction model acquired from a service end of the switch machine monitoring system, wherein the fault type prediction model is trained based on the training samples, and the training samples comprise the switch machine current data collected by the edge collection end and the corresponding fault type classification tags of the switch machine;
S320: perform edge computing for the collected switch machine current data based on the fault type prediction model to obtain fault type prediction data of the switch machine;
S411: the edge collection end sends the collected operating current data to the service end;
S412: the service end performs classification training based on the training samples to obtain a fault type prediction model;
S413: the service end sends the fault type prediction model to the edge collection end to perform a model deployment;
S421: the edge collection end sends the collected operating current data to a first workstation;
S422: generate training samples based on the operating current data and send the training samples to the service end;
S423: the service end performs classification training based on the training samples to obtain a fault type prediction model;
S424: the service end sends the fault type prediction model to the edge collection end to perform a model deployment;
S425: the edge collection end reads the model from a model storage space and uses the fault type prediction model to perform a fault prediction based on the currently collected operating current data;
S431: the edge collection end sends the collected operating current data and prediction data to the second workstation;
S432: select fault prediction data and/or non-fault data based on the prediction data and send it to the first workstation;
S433: send the training samples to the service end based on the fault prediction data and/or non-fault data;
S434: the service end performs classification training based on the training samples to obtain a fault type prediction model;
S435: the service end sends the fault type prediction model to the edge collection end to perform a model deployment;
510: model unit; 511: sampling channel configuration module; 512: model mapping module; 513: model storage module; 520: storage medium; 5110: input interface; 5120: processing device; 5130: service end;
610: sample acquisition module; 620: model training module; 630: model sending module;
710: model deployment module; 720: prediction module;
810, 910: processing units; 820, 920: communication interfaces; 830, 930: memories; 840, 940: communication buses.

### Specific Embodiments

To understand the technical characteristics, objective, and effects of the present invention more clearly, specific implementation modes of embodiments of the present invention are described below in combination with the drawings.

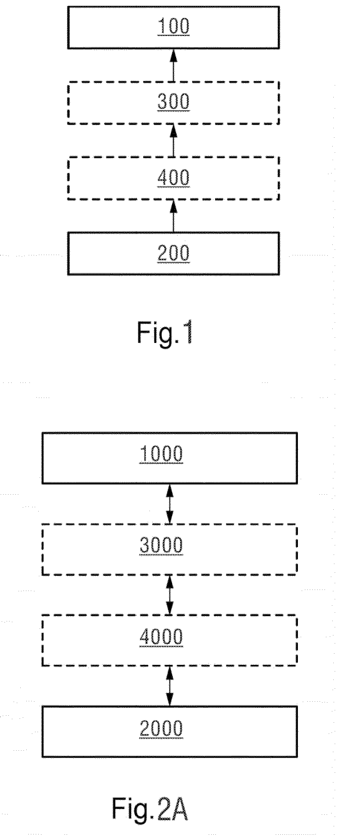

Fig. 1 shows the architecture of a switch machine monitoring system involved in one embodiment of related technology. As shown in the figure, the switch machine monitoring system comprises a service end 100, a first workstation 300, a second workstation 400 and an edge collection end 200. As a network covering a specific area, the switch machine monitoring system may be wholly deployed in a railway management system. The railway management system may be a train dispatching system, an information processing system, a railway safety monitoring system or other management systems. The switch machine monitoring system may be deployed as a subsystem of the railway safety monitoring system. For example, the railway management system may include a level-1 management system (for example, the background of a railway bureau or a railway company) for a first area, a level-2 management system (for example, the background of a railway train depot or a railway branch company) for a second area, a level-3 management system for a third area and a terminal collection system (for example, a railway station). The second area may be a sub-area of the first area, and the third area may be a sub-area of the second area. A level-1 management system may manage a plurality of level-2 management systems. A level-2 management system may manage a plurality of level-3 management systems. A level-3 management system may manage a plurality of terminal collection systems.

In addition, the service end 100 may be deployed at the center of a level-1 management system. The first workstation 300 may be deployed at the center of a level-2 management system. The second workstation 400 may be deployed at the center of a level-3 management system. The edge collection end 200 may be deployed in the terminal collection system. A plurality of edge collection ends 200 may be included in a terminal collection system, and each edge collection end 200 may monitor at least one switch machine, for example, monitor the operating current of at least one switch machine.

The switch machine intelligent monitoring system that is deployed based on a plurality of edge collection ends 200 compares a set fault current threshold with the operating current of a switch machine and reports an error when the operating current of the switch machine is not consistent with the fault current threshold. Since the fault current threshold is set according to experience and the operating current of the switch machine has a certain range of fluctuations when the switch machine operates, incorrect error messages will appear and a signaler needs to examine and process all error messages to find correct error messages. Thus, the workload of processing error messages is increased.

Fig. 2A shows another architecture of a switch machine monitoring system involved in one embodiment of the present invention. As shown in the figure, the architecture in Fig. 2A is applicable to the management architecture of a fault type prediction model and comprises four types of system network nodes, i.e., a service end 1000, a first workstation 3000, a second workstation 4000 and an edge collection end 2000, realizing an issued or deployed data flow direction of the model from the top down. In addition, the above-mentioned four types of nodes realize the data flow direction of the collection/generation of training samples from the bottom up. The architecture may comprise at least either of the first workstation 3000 and the second workstation 4000 or may comprise neither of the first workstation 3000 and the second workstation 4000. The switch machine monitoring system provided by embodiments of the present invention does not need to be separately deployed, and the switch machine monitoring system can adapt to the railway safety monitoring system and to all levels of the railway management system and can save the cost of personnel training and staffing.

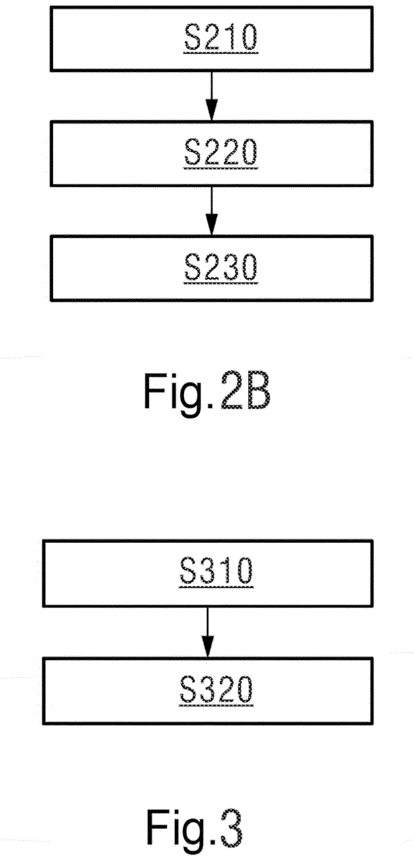

Fig. 2B is a flowchart of the model deployment method provided by another embodiment of the present invention. The model deployment method shown in Fig. 2B is executed by the service end 1000 of the switch machine monitoring system, and the service end 1000 may be implemented as one or more physical servers, for example, a cloud service end of a dedicated cloud or private cloud of the railway management system. The service end may only perform processing associated with switch machine monitoring, or may simultaneously serve as a service end of other services of the railway management system. The switch machine monitoring system may comprise only the node of the service end 1000 and the node of the edge collection end 2000, or may comprise other nodes, for example, workstation nodes of multi-level workstations. In addition, among the multi-level workstations, the workstation at each level may perform the same or different processing for data flows in the model deployment method. The multi-level workstations may be deployed based on other services of the railway management system, and in addition, the service of the switch machine monitoring may be consistently deployed along with other services in the workstation at each level. The method shown in Fig. 2B comprises:
S210: acquire training samples, the training samples comprising switch machine current data collected by an edge collection end of a switch machine monitoring system and corresponding fault type classification tags of a switch machine.

It should be understood that the switch machine monitoring system may comprise one or more edge collection ends. Each edge collection end may manage one or more switch machines. One or more edge collection ends may directly or indirectly upload the collected switch machine current data to an upper-level node, for example, a workstation or a service end. Each edge collection end may be implemented as one or more physical collection devices (for example, collectors), and for example, a hardware system such as a processing unit system, and a software system may be configured in the collector. The hardware system comprises a digital-to-analog conversion circuit, a processing device such as central processing unit (CPU), graphics processing unit (GPU) and tensor processing unit (TPU), and a printed circuit board. The software system may comprise a noise reduction module, a collection module and a model management module. The organic cooperation between the hardware system and the software system implements all or some of the functions of the edge collection end. In addition, if the edge collection end is implemented as a plurality of physical collection devices, the functions of the plurality of physical collection devices may be separated or integrated. For example, heterogeneous computing and concurrent computing between the plurality of physical collection devices may be realized through the communication bus to implement all or some of the functions of the edge collection end in embodiments of the present invention.

In addition, the switch machine current data may comprise operating current data of at least one switch machine, for example, operating current curve data. Furthermore, the fault type classification tags may be marked based on at least one of position information of the area where a switch machine is located, time information, and device type information such as type information.

S220: perform classification training based on the training samples to obtain a fault type prediction model.

It should be understood that classification training may be performed based on a classification neural network and that the classification neural network may be a neural network such as a back propagation (BP) neural network, a convolutional neural network (CNN) and a multi-layer perceptron (MLP) neural network. For example, the above-mentioned training may be performed for a one-dimensional convolutional neural network to obtain a fault type prediction model.

In one instance, pre-processing such as feature extraction may be performed for the training samples to give efficient intermediate representations of the training samples, and the extracted features are then input into a target neural network for training. For example, as one instance of switch machine current data, the operating current curve of the switch machine may be divided into a starting interval, an operating interval and an ending interval. Dimensions of feature vectors may be constructed for the starting interval, the operating interval and the ending interval, and the training efficiency of the model can be improved based on the above-mentioned efficient intermediate representations.

In another instance, fault type classification tags may be used as a first output tag and a second output tag of the target neural network for training. The first output tag may be fault type information (for example, fault type vector) and the second output tag may be interval information (for example, the area ratios between three intervals may be used as three dimensions to construct current curve interval vectors) of a current curve. Since the second output tag realizes the efficient intermediate representations of the training samples, the training efficiency of the model is improved.

S230: send the fault type prediction model to the edge collection ends to perform a fault type prediction model deployment.

It should be understood that in one instance the service end 1000 may send the fault type prediction model to the model storage space of the edge collection end 2000 so that the fault type prediction model can be read from the model storage space for a fault prediction. In another instance, the service end 1000 may send the fault type prediction model to the model receiving module of the edge collection end 2000 and deploy the fault type prediction model in a specific storage position in the model storage space based on the mapping relationship between the model and information (for example, device type information) of a plurality of switch machines managed by the edge collection end 2000.

Since training samples on which the fault type prediction model is trained based at the service end comprise the switch machine current data collected by the edge collection end, the deployment of the fault type prediction model at the edge collection end improves the prediction accuracy of the fault type prediction model through closed-loop data flows. In addition, the utilization of the fault type prediction model improves the fault prediction efficiency and avoids the heavy workload that would be required if troubleshooting is performed manually.

Furthermore, since the fault type prediction model is trained at the service end and is deployed at the edge collection end, the separation of model training from model prediction is realized and the management efficiency of the model is improved. Moreover, the deployment of the fault type prediction model at the edge collection end improves the efficiency of edge data processing and saves the communication cost such as bandwidth, compared with non-edge data processing.

In one instance, the switch machine current data in the training samples may be collected by the edge collection end, and switch machine current data may be marked after a manual analysis to obtain fault type classification tags.

In one instance, the training samples are used to train the one-dimensional convolutional neural network to obtain a fault type prediction model. Since the training efficiency of the one-dimensional convolutional neural network is high and the model obtained by training the one-dimensional convolutional neural network is small and occupies a small storage space, a high-efficient model deployment can be realized.

In another instance, a first fault type prediction model may be used as the current fault type prediction model. The switch machine current data in the training samples may be predicted by the previous fault type prediction model to obtain prediction data. The fault type classification tags may be marked only based on prediction data. The fault type classification tags may be further marked based on the prediction data as well as the position information of the area where the switch machine is located, the time information, and the device type information such as type information. After the current fault type prediction model is obtained through training, the current fault type prediction model may be used to update the previous fault type prediction model.

In another implementation mode of the present invention, a first fault type prediction model may be used to update a second fault type prediction model. For example, the service end sends the second fault type prediction model to the edge collection end to perform a model deployment, wherein fault type classification tags are obtained by marking the fault prediction data obtained by inputting the switch machine current data into the second fault type prediction model, wherein the first fault type prediction model is deployed by the edge collection end and is used to update the second fault type prediction model. Since fault type classification tags are obtained by marking the fault prediction data of the second fault type prediction model, the first fault type prediction model generated by use of the fault type classification tags realizes high-efficient updating of the second fault type prediction model at the edge collection end.

In another implementation mode of the present invention, the switch machine monitoring system further comprises a first workstation, wherein acquiring training samples comprises acquiring fault type classification tags from the first workstation and generating the training samples based on fault type classification tags, wherein the first workstation generates the fault type classification tags according to the fault prediction data of the second fault type prediction model.

Since the first workstation generates fault type classification tags according to the fault prediction data of the second fault type prediction model, an external interface providing fault type classification tags is effectively set as far as the service end is concerned. For example, at the first workstation, fault type classification tags may directly be entered by a signal engineer who has engineering experience or a high signal technology level via the external interface, or may be generated by a marking application compiled by a signal engineer.

In another implementation mode of the present invention, the switch machine monitoring system further comprises a second workstation, the first workstation acquires fault prediction data from the second workstation, and the second workstation acquires prediction data of the second fault type prediction model from the edge collection end and selects fault prediction data from the prediction data.

Since the second workstation acquires prediction data of the second fault type prediction model from the edge collection end and selects fault prediction data from the prediction data, an external interface providing screened fault prediction data is effectively set as far as the first workstation is concerned.

For example, at the first workstation, fault prediction data may be selected by a signaler and entered via the above-mentioned external interface, or selected by a pre-configured application and then entered by the signaler via the external interface, or selected by a pre-configured application and entered by the application via the external interface. How fault prediction data are selected and entered is not restricted in embodiments of the present invention. It should be understood that the above-mentioned signal engineer or a person having no technological knowledge may act as the signaler. Since the first workstation and the second workstation have different requirements for operators and the functions of the first workstation and the second workstation are separated, an effective division of labor between operators is realized.

Fig. 3 is a flowchart of the fault prediction method provided by another embodiment of the present invention. The fault prediction method shown in Fig. 3 is executed by the edge collection end 2000 of the switch machine monitoring system. For a related description and explanations of the switch machine monitoring system, refer to Fig. 2B. The switch machine monitoring system will not be described here again. The fault prediction method shown in Fig. 3 comprises:
S310: deploy a fault type prediction model acquired from the service end of the switch machine monitoring system. The fault type prediction model is trained based on training samples, and the training samples comprise switch machine current data collected by the edge collection end and corresponding fault type classification tags of the switch machine.
S320: perform edge computing for the collected switch machine current data based on the fault type prediction model to obtain fault type prediction data of the switch machine.

Since the training samples for training the fault type prediction model at the service end comprise the switch machine current data collected by the edge collection end, the deployment of the fault type prediction model at the edge collection end improves the prediction accuracy of the fault type prediction model through closed-loop data flows. In addition, the utilization of the fault type prediction model improves the fault prediction efficiency and avoids heavy workload of manually troubleshooting a switch machine.

Furthermore, since the fault type prediction model is trained at the service end and is deployed at the edge collection end, separation of model training from model prediction is realized and the management efficiency of the model is improved. Moreover, the fault type prediction model is able to perform edge computing, and thus the efficiency of processing edge data is improved.

In one instance, the training samples are used to train the one-dimensional convolutional neural network to obtain a fault type prediction model. Since the training efficiency of the one-dimensional convolutional neural network is high and the model obtained by training the one-dimensional convolutional neural network is small and occupies a small storage space, a high-efficient model deployment can be realized. Accordingly, the edge collection end performs edge computing for the collected switch machine current data, and thus the computing efficiency is improved and a high-efficient fault prediction is realized.

In one instance, the edge collection end deploys the second fault type prediction model acquired from the service end, wherein fault type classification tags are obtained by marking the fault prediction data obtained by inputting the switch machine current data into the second fault type prediction model. The edge collection end uses the first fault type prediction model acquired from the service end to update the second fault type prediction model. Since fault type classification tags are obtained by marking fault prediction data of the second fault type prediction model, the first fault type prediction model generated by use of the fault type classification tags realizes high-efficient updating of the second fault type prediction model at the edge collection end.

In another implementation mode of embodiments of the present invention, the method further comprises: sending the collected switch machine current data and the fault type prediction data to a workstation so that the workstation classifies the fault type according to the fault type prediction data and sends updated training samples to the service end. Since the workstation classifies the fault type according to the fault type prediction data and supplies the fault type to the service end, the updating of training samples is realized by using the workstation as an external interface of the service end and the edge collection end, while independent processing of the service end and the edge collection end is guaranteed.

For example, the switch machine monitoring system further comprises a workstation, wherein the edge collection end uploads fault prediction data to the workstation so that the workstation can generate fault type classification tags based on fault prediction data, wherein the service end acquires fault type classification tags from the workstation. Since the workstation generates fault type classification tags according to fault prediction data of the second fault type prediction model, a post-processing interface providing fault type classification tags is effectively set as far as the edge collection end is concerned.

In another implementation mode of embodiments of the present invention, deploying a fault type prediction model acquired from the service end of the switch machine monitoring system comprises: deploying an updated fault type prediction model acquired from the service end of the switch machine monitoring system. The updated fault type prediction model is trained based on updated training samples. Since the updated fault type prediction model is trained based on updated training samples and the updated fault type prediction model is deployed at the edge collection end, the prediction accuracy of the fault type prediction model is improved.

In another implementation mode of embodiments of the present invention, performing edge computing for the collected switch machine current data based on the fault type prediction model to obtain fault type prediction data of the switch machine comprises: performing computing processing for the collected switch machine current data in a preset sampling period based on a sampling starting signal and a sampling ending signal to obtain digital current data; inputting the digital current data into the fault type prediction model to perform one-dimensional convolutional neural network edge computing to obtain fault type prediction data of the switch machine. Since the collection of the switch machine current data in a preset sampling period is realized based on a sampling staring signal and a sampling ending signal, the data sampling efficiency is improved. For example, analog operating current data of the switch machine can be acquired and an analog-to-digital conversion can be performed for the analog operating current data to obtain digital current data. For example, the received analog current data may be sampled based on a specific sampling frequency during the above-mentioned analog-to-digital conversion processing to obtain the digital current data.

In another implementation mode of embodiments of the present invention, performing computing processing for the collected switch machine current data in a preset sampling period based on a sampling starting signal and a sampling ending signal to obtain digital current data comprises: starting performing computing processing for the collected switch machine current data if a sampling starting signal is received; finishing performing computing processing for the collected switch machine current data if a sampling ending signal is received or no sampling ending signal is received within a maximum sampling time period. Since the computing processing for the collected switch machine current data is finished when a sampling ending signal is received or no sampling ending signal is received within a maximum sampling time period, the sampling efficiency is improved.

In one instance, sampling is started in response to a sampling starting signal and sampling is finished in response to a sampling ending signal, wherein the triggering interval between a sampling starting signal and a sampling ending signal may be determined based on a sampling period. For example, the triggering interval between a sampling starting signal and a sampling ending signal is set to the sampling period. The sampling period may be determined based on a corresponding time segment of the operating current curve of current data. For example, the operating current curve of a switch machine may comprise a rising section, a steady section and an ending section. For example, the rising section, the steady section and the ending section may last a target time segment, 10s, for example. The sampling period may be set to a period no less than the target time segment (for example, 10s) .

In another instance, sampling is started in response to a sampling starting signal and sampling is finished in response to the expiration of the maximum sampling time period. The maximum sampling time period may be determined based on a corresponding time segment of the operating current curve of current data. For example, the operating current curve of a switch machine may comprise a rising section, a steady section and an ending section. For example, the rising section, the steady section and the ending section may last a target time segment, 10s, for example. The maximum sampling time period may be set to a period no less than the target time segment (for example, 20s).

It should be understood that a different or the same sampling period may be set for each switch machine and that the same maximum sampling time period may be set for a group of switch machines, in other words, an ending triggering signal and a triggering signal at the expiration of the maximum sampling time period may be set for each switch machine. Thus, when an ending triggering signal fails to be triggered (a fault occurs), a sampling process can still be finished. Since the maximum sampling time period is greater than the sampling period, sampling data of a switch machine can still be obtained even if the above-mentioned fault occurs.

In another implementation mode of embodiments of the present invention, if the time interval between the sampling starting signal and the sampling ending signal is less than the maximum sampling time period, a zero value is filled in the remaining time sequences. Since a zero value is filled in the remaining time sequences between the time interval and the maximum sampling time period, the communication resource of sampling signals is saved while the sampling reliability is guaranteed. For example, digital current data obtained through sampling may be multiplied by a preset value to obtain integral current data, wherein the preset value may be an integral multiple of the sampling frequency.

In another implementation mode of embodiments of the present invention, inputting the digital current data into the fault type prediction model to perform edge computing to obtain fault type prediction data of the switch machine comprises: classifying channel configurations for the digital current data according to the type of the switch machine to obtain at least one piece of channel digital current data; classifying channel configurations for the fault type prediction model according to the type of the corresponding switch machine to obtain at least one channel fault type prediction model; matching at least one piece of channel digital current data to at least one channel fault type prediction model to perform one-dimensional convolutional neural network edge computing to obtain fault type prediction data of the switch machine. Since at least one piece of channel digital current data matches at least one channel fault type prediction model, the efficiency and accuracy of fault prediction processing of channel digital current data by using a fault type prediction model are improved.

In another implementation mode of embodiments of the present invention, the type of the switch machine is a type classified according to the device parameters of the switch machine. Since the type classified according to device parameters of the switch machine is a channel configuration type and the device parameters are highly associated with the fault prediction result, the efficiency of channel configurations is improved.

For example, device parameters may indicate the device type, operating voltage parameters, operating temperature parameters, operating pressure parameters and device installation parameters of a switch machine. For operating voltage parameters, device parameters may include DC switch machine and AC switch machine. For device installation parameters, device parameters may include internally-locked switch machine and externally-locked switch machine.

For example again, a fault type prediction model may be utilized to predict fault types of at least one switch machine of a target device type, wherein deploying a fault type prediction model acquired from the service end of the switch machine monitoring system comprises: storing the fault type prediction model acquired from the service end in a storage address corresponding to the target device type. Since at least one switch machine of a target device type can share a fault type prediction model, the storage address of the fault type prediction model corresponds to the target device type and the reading efficiency and writing efficiency of the model are improved.

In another implementation mode of the present invention, classifying channel configurations for the digital current data according to the type of the switch machine to obtain at least one piece of channel digital current data comprises: collecting current data (for example, digital current data) of at least one switch machine of the target device type accordingly through at least one collection channel; inputting current data of at least one switch machine into the fault type prediction model to obtain the fault type of at least one switch machine. Since at least one collection channel corresponds to at least one switch machine of the target device type, the separation or concurrent sampling of at least one switch machine (in the case of a plurality of collection channels) is realized through at least one collection channel, while the reading efficiency and writing efficiency of the model are guaranteed.

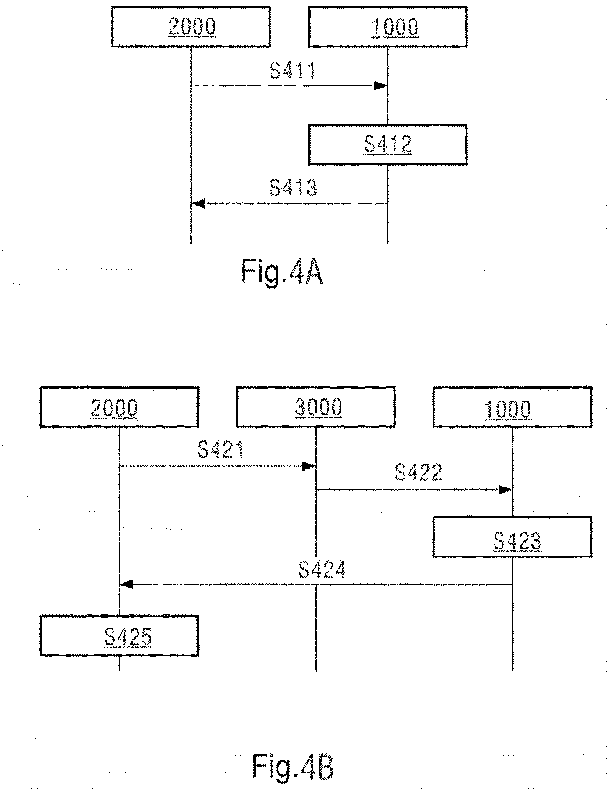

Fig. 4A is a flowchart of the model deployment method provided by another embodiment of the present invention. As shown in the figure, only the data exchange process between the service end 1000 and the edge collection end 2000 is shown in the instance. Nevertheless, it should be understood that more or fewer steps may further be included in other instances.

In step S411, the edge collection end 2000 sends the collected operating current data to the service end 1000, wherein the collected operating current data are used as a part of training samples of the fault type prediction model. Training samples may further comprise the corresponding fault type tags and/or non-fault tags of operating current data.

In step S412, the service end 1000 performs supervised classification training based on training samples to obtain a fault type prediction model. For example, training samples are used as an input of the target neural network such as a convolutional neural network (for example, one-dimensional convolutional neural network) and the above-mentioned fault type tags or non-fault tags are used as an output of the target neural network to perform training.

In step S413, the service end 1000 sends the fault type prediction model to the edge collection end 2000 to perform a model deployment. In one instance, the service end 1000 may send the fault type prediction model to the model storage space of the edge collection end 2000 so that the fault type prediction model can be read from the model storage space for a fault prediction. In another instance, the service end 1000 may send the fault type prediction model to the model receiving module of the edge collection end 2000 and deploy the fault type prediction model in a specific storage position in the model storage space based on the mapping relationship between the model and information (for example, device type information) of a plurality of switch machines managed by the edge collection end 2000.

Fig. 4B is a flowchart of the model deployment method provided by another embodiment of the present invention. As shown in the figure, only the data exchange process between the service end 1000, the first workstation 3000 and the edge collection end 2000 is shown in the instance. Nevertheless, it should be understood that more or fewer steps may further be included in other instances.

In step S421, the edge collection end 2000 sends the collected operating current data to the first workstation 3000, wherein the collected operating current data are used as a part of training samples of the fault type prediction model.

In step S422, the first workstation generates training samples based on the above-mentioned operating current data and sends the training samples to the service end 1000. For example, the first workstation generates corresponding fault type tags or non-fault tags of operating current data based on the operating current data and uses the operating current data together with fault type tags and/or non-fault tags as training samples. In one instance, training samples may comprise only fault type tags. Operating current data corresponding to fault type tags provides more valuable training data, and thus the training efficiency of the model is improved.

In step S423, the service end 1000 performs supervised classification training based on training samples to obtain a fault type prediction model. For example, training samples are used as an input of the target neural network (for example, convolutional neural network) and the above-mentioned fault type tags or non-fault tags are used as an output of the target neural network to perform training.

In step S424, the service end 1000 sends the fault type prediction model to the edge collection end 2000 to perform a model deployment. In one instance, the service end 1000 may send the fault type prediction model to the model storage space of the edge collection end 2000 so that the fault type prediction model can be read from the model storage space for a fault prediction. In another instance, the service end 1000 may send the fault type prediction model to the model receiving module of the edge collection end 2000 and deploy the fault type prediction model in a specific storage position in the model storage space based on the mapping relationship between the model and information (for example, device type information) of a plurality of switch machines managed by the edge collection end 2000.

In step S425, the edge collection end 2000 reads the model from a model storage space and uses the fault type prediction model to perform a fault prediction based on the currently collected operating current data. In one instance, the edge collection end 2000 reads the fault type prediction model from a target storage address in the model storage space. The target storage address may be generated after the fault type prediction model sent by the service end 1000 is received, and sent to the model management module (which may be a part of the model storage module) of the edge collection end 2000. In another instance, the edge collection end 2000 reads the fault type prediction model from the corresponding storage address of the target device type which the target switch machine has in the storage address space.

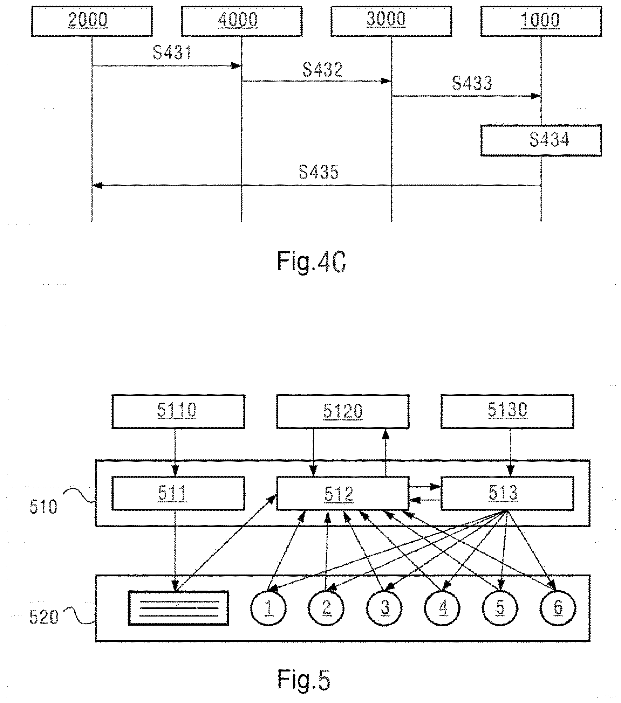

Fig. 4C is a flowchart of the model deployment method provided by another embodiment of the present invention. As shown in the figure, only the data exchange process between the service end 1000, the first workstation 3000, the second workstation 4000 and the edge collection end 2000 is shown in the instance. Nevertheless, it should be understood that more or fewer steps may further be included in other instances.

In step S431, the edge collection end 2000 sends the collected operating current data and prediction data to the second workstation 4000. In one instance, a copy of operating current data is sent to the service end 1000 and/or the first workstation 3000.

In step S432, the second workstation selects fault prediction data and/or non-fault data based on the above-mentioned prediction data and sends it to the first workstation 3000.

In step S433, the first workstation sends training samples to the service end 1000 based on fault prediction data and/or non-fault data. For example, the first workstation generates corresponding fault type tags or non-fault tags of operating current data based on the operating current data and uses the operating current data together with fault type tags and/or non-fault tags as training samples. In one instance, training samples may comprise only fault type tags. Operating current data corresponding to fault type tags provide more valuable training data, and thus the training efficiency of the model is improved.

In step S434, the service end 1000 performs supervised classification training based on training samples to obtain a fault type prediction model. For example, training samples are used as an input of the target neural network (for example, convolutional neural network) and the above-mentioned fault type tags or non-fault tags are used as an output of the target neural network to perform training.

In step S435, the service end 1000 sends the fault type prediction model to the edge collection end 2000 to perform a model deployment. In one instance, the service end 1000 may send the fault type prediction model to the model storage space of the edge collection end 2000 so that the fault type prediction model can be read from the model storage space for a fault prediction. In another instance, the service end 1000 may send the fault type prediction model to the model receiving module of the edge collection end 2000 and deploy the fault type prediction model in a specific storage position in the model storage space based on the mapping relationship between the model and information (for example, device type information) of a plurality of switch machines managed by the edge collection end 2000.

Fig. 5 is a flowchart of the model mapping method provided by another embodiment of the present invention. It should be understood that the model mapping method in the model deployment corresponds to the model mapping method in a fault prediction. The model mapping method may be executed by the model unit 510 shown in the figure, the configuration file (file shown on the left of block 520 in the figure) and a plurality of model files (six model files 1, 2, 3, 4, 5 and 6 shown on the right of block 520 in the figure) may be stored (read from and/or written into) in the storage medium 520. For example, the storage medium 520 may be a storage medium such as flash or Read-Only Memory (ROM). The model unit 510 may comprise a sampling channel configuration module 511, a model mapping module 512 and a model storage module 513. Accordingly, as far as the modules of the model unit 510 are concerned, a field engineer may configure the sampling channel configuration module 511 by configuring the configuration file via the input interface 5110. The model mapping module 512 may execute the model mapping method by invoking the processing device 5120, and the processing device 5120 may be a processing unit such as central processing unit (CPU), graphics processing unit (GPU) or tensor processing unit (TPU). The model storage module 513 may be a slave service end 5130 (which may be the service end 1000 or may not be the service end 1000).

For the model mapping method in a model deployment, the edge collection end acquires the trained fault type prediction model (for example, the instance of the first fault type prediction model) from the service end, and extracts and analyzes the fault type prediction model.

In one instance, the edge collection end does not store a previous prediction model and writes the fault type prediction model in a preset storage address. For example, the correspondence between the pre-configured storage address space and the device type may be determined. The address of the fault type prediction model in the storage address space may be determined based on the correspondence and the device type of the switch machine for which the fault type prediction model is built.

In another instance, the edge collection end stores a previous prediction model (for example, an instance of a second fault type prediction model), and the edge collection end determines the previous storage address of the previous prediction model and stores the current fault type prediction model (for example, an instance of a first fault type prediction model) based on the storage address. For example, the edge collection end uses the first fault type prediction model to update the second fault type prediction model. For example, the current fault type prediction model may be stored in the next storage address adjacent to the previous storage address. The current fault type prediction model may be written into the next storage address and then the previous prediction model stored in the previous storage address may be deleted. For example again, the current fault type prediction model may be written into a storage address adjacent to the previous storage address, and the previous fault type prediction model may be deleted while the write operation is performed. It should be understood that the correspondence between the pre-configured storage address space and the device type may be determined. The address of the fault type prediction model in the storage address space may be determined based on the correspondence and the device type of the switch machine for which the fault type prediction model is built. For example, the previous prediction model performs prediction processing for the sampled current (operating current curve) of the switch machine of the target device type, that is to say, the previous prediction model corresponds to the target device type. In addition, the current prediction model also performs prediction processing for the sampled current (operating current curve) of the switch machine of the target device type, that is to say, the current fault type prediction model also corresponds to the target device type. Therefore, both the previous prediction model and the current fault type prediction model correspond to the target device type. In this case, the previous storage address and the adjacent storage address are both located in the above-mentioned storage space.

For the model mapping method in a fault prediction, the edge collection end (for example, the processing device 5120 of the edge collection device) collects the operating current of the target switch machine. The edge collection end reads at least one of six model files 1, 2, 3, 4, 5 and 6 of fault type prediction models from the corresponding storage address of the target device type which the target switch machine has. For example, the edge collection end reads the model file (for example, model file 2) corresponding to the target device type. The edge collection end may utilize model file 2 to obtain corresponding prediction data based on collected operating current data (operating current curve data). It should be understood that if prediction data indicates that the operating current curve is normal, no further processing is required for the target switch machine. If prediction data indicates that the operating current curve is the target fault type, the engineer may overhaul the target switch machine or interrupt the operating state of the target switch machine; or check again whether the operating current curve is the target fault type, and if yes, overhaul the target switch machine or interrupt the operating state of the target switch machine; or upload the prediction data and the corresponding collected operating current data to the workstation or the service end for sample marking. It should be understood that marked tags may include non-fault tags and various fault type tags and that only prediction data indicating the fault type and the corresponding operating current data may be uploaded to the workstation or the service end.

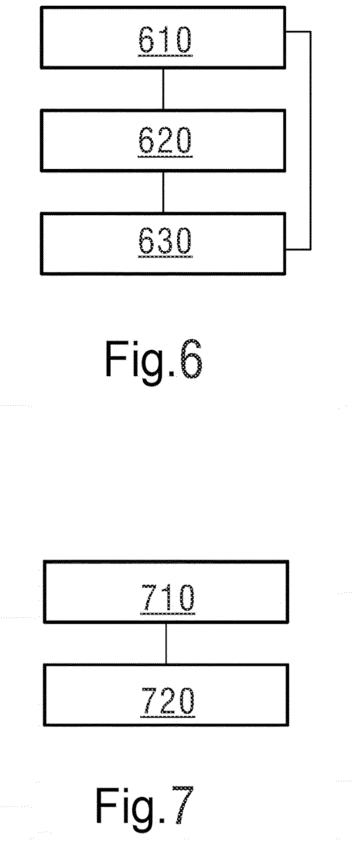

Fig. 6 is a schematic block diagram of the model deployment apparatus provided by another embodiment of the present invention. The model deployment apparatus shown in Fig. 6 is configured at the service end of a switch machine monitoring system, and the apparatus shown in Fig. 6 comprises:
a sample acquisition module 610, configured to acquire training samples, the training samples comprising switch machine current data collected by the edge collection end of the switch machine monitoring system and corresponding fault type classification tags of the switch machine;
a model training module 620, configured to perform supervised classification training based on the training samples to obtain a first fault type prediction model;
a model sending module 630, configured to send the first fault type prediction model to the edge collection end to perform a model deployment.

In another implementation mode of the present invention, the model sending module is further configured to: send a second fault type prediction model to the edge collection end to perform a model deployment, wherein fault type classification tags are obtained by marking the fault prediction data obtained by inputting the switch machine current data into the second fault type prediction model, wherein the first fault type prediction model is used to update the second fault type prediction model after being deployed.

In another implementation mode of the present invention, the switch machine monitoring system further comprises a first workstation, wherein the sample acquisition module is specifically configured to: acquire fault type classification tags from the first workstation and generate training samples based on fault type classification tags, wherein the first workstation generates fault type classification tags according to fault prediction data of the second fault type prediction model.

In another implementation mode of the present invention, the switch machine monitoring system further comprises a second workstation, the first workstation acquires fault prediction data from the second workstation, and the second workstation acquires prediction data of the second fault type prediction model from the edge collection end and selects fault prediction data from the prediction data.

Fig. 7 is a schematic block diagram of the fault prediction apparatus provided by another embodiment of the present invention. The fault prediction apparatus shown in Fig. 7 is configured at the edge collection end of a switch machine monitoring system, and the apparatus shown in Fig. 7 comprises:
a model deployment module 710, configured to deploy a first fault type prediction model acquired from the service end of the switch machine monitoring system, wherein the first fault type prediction model is trained based on training samples at the service end and the training samples comprise switch machine current data collected by the edge collection end and corresponding fault type classification tags of the switch machine;
a prediction module 720, configured to perform edge computing for the collected switch machine current data based on the first fault type prediction model.

In another implementation mode of the present invention, the model deployment module is further configured to: deploy a second fault type prediction model acquired from the service end, wherein fault type classification tags are obtained by marking the fault prediction data obtained by inputting switch machine current data into the second fault type prediction model, wherein the model deployment module is specifically configured to: use the first fault type prediction model acquired from the service end to update the second fault type prediction model.

In another implementation mode of the present invention, the switch machine monitoring system further comprises a workstation, wherein the apparatus further comprises a data reporting module, which uploads fault prediction data to the workstation so that the workstation can generate fault type classification tags based on fault prediction data, wherein the service end acquires fault type classification tags from the workstation.

In another implementation mode of the present invention, the prediction module is specifically configured to: utilize the first fault type prediction model to predict the fault type of at least one switch machine of a target device type, wherein the model deployment module is specifically configured to: store the first fault type prediction model acquired from the service end in a storage address corresponding to the target device type.

In another implementation mode of the present invention, the prediction module is specifically configured to: collect current data of at least one switch machine of a target device type accordingly via at least one collection channel; input the current data of at least one switch machine into the first fault type prediction model to obtain the fault type of at least one switch machine.

Embodiments of the present invention further provide a storage medium and the storage medium contains a stored program, wherein the program controls the execution of the following method by the device comprising the storage medium when running: acquiring training samples, wherein the training samples comprise switch machine current data collected by the edge collection end of the switch machine monitoring system and corresponding fault type classification tags of the switch machine; performing supervised classification training based on the training samples to obtain a first fault type prediction model; sending the first fault type prediction model to the edge collection end to perform a model deployment;
or, deploying the first fault type prediction model acquired from the service end of the switch machine monitoring system, wherein the first fault type prediction model is trained based on training samples at the service end and the training samples comprise switch machine current data collected by the edge collection end and corresponding fault type classification tags of the switch machine; performing a fault type prediction based on the first fault type prediction model.

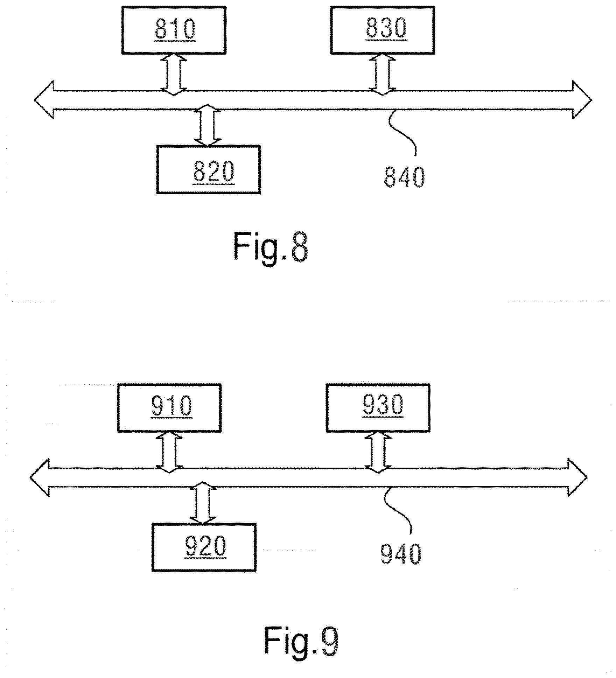

Fig. 8 shows the structure of one electronic device provided by embodiments of the present invention. The electronic device may be the service end, which consists of one or more servers, for example, of a switch machine monitoring system. The electronic device shown in Fig. 8 comprises one or more processing units 810, an communication interface 820, a memory 830 and a communication bus 840, and one or more programs, wherein the one or more processing units 810, the communication interface 820 and the memory 830 realize communication between them over the communication bus 840, and one or more programs are stored in the memory 830 and are configured to be executed by one or more processing units 810, and one or more programs are configured to: acquire training samples, wherein the training samples comprise switch machine current data collected by the edge collection end of the switch machine monitoring system and corresponding fault type classification tags of the switch machine; perform classification training based on the training samples to obtain a fault type prediction model; send the fault type prediction model to the edge collection end to perform a fault type prediction model deployment.

Fig. 9 shows the structure of another electronic device provided by embodiments of the present invention. The electronic device may be the edge collection end, which consists of one or more collectors, for example, of a switch machine monitoring system. The electronic device shown in Fig. 9 comprises one or more processing units 910, a communication interface 920, a memory 930 and a communication bus 940, and one or more programs, wherein the one or more processing units 910, the communication interface 920 and the memory 930 realize communication between them over the communication bus 940, and one or more programs are stored in the memory 930 and are configured to be executed by one or more processing units 910, and the one or more programs are configured to: deploy a fault type prediction model acquired from the service end of the switch machine monitoring system, wherein the fault type prediction model is trained based on training samples and the training samples comprise switch machine current data collected by the edge collection end and corresponding fault type classification tags of the switch machine; perform edge computing for the collected switch machine current data based on the fault type prediction model so as to obtain fault type prediction data of the switch machine.

In another implementation mode of embodiments of the present invention, the one or more programs are configured to: send the collected switch machine current data and the fault type prediction data to a workstation so that the workstation classifies the fault type according to the fault type prediction data and sends updated training samples to the service end.

In another implementation mode of the present invention, the one or more programs are specifically configured to: deploy an updated fault type prediction model acquired from the service end of the switch machine monitoring system, wherein the updated fault type prediction model is trained based on updated training samples.

In another implementation mode of the present invention, the one or more programs are specifically configured to: perform computing processing for the collected switch machine current data in a preset sampling period based on a sampling starting signal and a sampling ending signal to obtain digital current data; input the digital current data into the fault type prediction model to perform one-dimensional convolutional neural network edge computing to obtain fault type prediction data of the switch machine.

In another implementation mode of the present invention, the one or more programs are specifically configured to: start performing computing processing for the collected switch machine current data if a sampling starting signal is received; finish performing computing processing for the collected switch machine current data if a sampling ending signal is received or no sampling ending signal is received within a maximum sampling time period.

In another implementation mode of embodiments of the present invention, if the time interval between the sampling starting signal and the sampling ending signal is less than the maximum sampling time period, a zero value is filled in the remaining time sequences.

In another implementation mode of the present invention, the one or more programs are specifically configured to: classify channel configurations for the digital current data according to the type of the switch machine to obtain at least one piece of channel digital current data; classify channel configurations for the fault type prediction model according to the type of the corresponding switch machine to obtain at least one channel fault type prediction model; match the at least one piece of channel digital current data to the at least one channel fault type prediction model to perform one-dimensional convolutional neural network edge computing to obtain fault type prediction data of the switch machine.

In another implementation mode of the present invention, the type of the switch machine is a type classified according to the device parameters of the switch machine.

Embodiments of the present invention further provide a computer program product, the computer program product is tangibly stored in a computer-readable medium and comprises computer-executable instructions, and the computer-executable instructions allow at least one processing unit to execute the method described in Fig. 2B or 3 when executed.

It should be noted that the computer storage medium may be a computer-readable signal medium or a computer-readable storage medium or any combination of both. The computer-readable medium may include but may not be limited to an electric, magnetic, optical, electromagnetic, infrared or semiconductor system, apparatus or device, or any combination thereof. A more specific instance of the computer-readable storage medium may include but may not be limited to an electric connection having one or more wires, a portable computer magnetic disk, a hard disk, a random access memory (RAM), read-only memory (ROM), an erasable programmable read-only memory (EPROM or flash), an optical fiber, a portable compact disk-read-only memory (CD-ROM), an optical storage medium, a magnetic storage medium, or any proper combination thereof. In the present invention, a computer-readable storage medium may be any tangible medium containing or storing a program, and the program may be used by or used in combination with an instruction execution system, apparatus or device. In the present invention, a computer-readable signal medium may be contained in a baseband or may be a data signal propagated as a part of a carrier, and the computer-readable signal medium carries computer-readable program codes. The propagated data signal may have different forms, including but not limited to an electromagnetic signal, an optical signal or any proper combination thereof. The computer-readable signal medium may further be any computer-readable medium other than a computer-readable storage medium, and the computer-readable medium may send, propagate or transmit a program configured to be used by or used in combination with an instruction execution system, apparatus or device. Program codes contained in a computer-readable medium may be transmitted by use of any proper medium, including but not limited to a wireless connection, electrical cable, optical cable, or radio frequency connection or any proper combination thereof.

It should be understood that although the present invention is described according to the embodiments, it does not mean that each embodiment contains only one independent technical solution. The descriptive method in the specification is only for the sake of clarity. Those skilled in the art should consider the specification as an integral body. The technical solutions in all these embodiments can be combined properly to form other implementation modes that those skilled in the art can understand.

The above are only exemplary implementation modes of embodiments of the present invention, but are not used to limit the scope of embodiments of the present invention. All equivalent variations, modifications, and combinations made by those skilled in the art without departing from the conception and principle of embodiments of the present invention should fall within the scope of protection of embodiments of the present invention.

## Claims

1. A fault prediction method, applied to an edge collection end of a switch machine monitoring system, the method comprising:
deploying a fault type prediction model acquired from a service end of the switch machine monitoring system, wherein the fault type prediction model is trained based on training samples and the training samples comprise switch machine current data collected by the edge collection end and corresponding fault type classification tags of the switch machine (S310);
performing edge computing for the collected switch machine current data based on the fault type prediction model to obtain fault type prediction data of the switch machine (S320) .

2. The method as claimed in claim 1, wherein the method further comprises:
sending the collected switch machine current data and the fault type prediction data to a workstation so that the workstation classifies the fault type according to the fault type prediction data and sends updated training samples to the service end.

3. The method as claimed in claim 1 or 2, wherein deploying a fault type prediction model acquired from the service end of the switch machine monitoring system comprises:
deploying an updated fault type prediction model acquired from the service end of the switch machine monitoring system, wherein the updated fault type prediction model is trained based on updated training samples.

4. The method as claimed in claim 1 or 2, wherein performing edge computing for the collected switch machine current data based on the fault type prediction model to obtain fault type prediction data of the switch machine comprises:
performing computing processing for the collected switch machine current data in a preset sampling period based on a sampling starting signal and a sampling ending signal to obtain digital current data;
inputting the digital current data into the fault type prediction model to perform one-dimensional convolutional neural network edge computing to obtain fault type prediction data of the switch machine.

5. The method as claimed in claim 4, wherein said performing computing processing for the collected switch machine current data in a preset sampling period based on a sampling starting signal and a sampling ending signal to obtain digital current data comprises:
starting performing computing processing for the collected switch machine current data if a sampling starting signal is received;
finishing performing computing processing for the collected switch machine current data if a sampling ending signal is received or no sampling ending signal is received within a maximum sampling time period.

6. The method as claimed in claim 5, wherein if the time interval between the sampling starting signal and the sampling ending signal is less than the maximum sampling time period, a zero value is filled in the remaining time sequences.

7. The method as claimed in claim 4, wherein inputting the digital current data into the fault type prediction model to perform edge computing to obtain fault type prediction data of the switch machine comprises:
classifying channel configurations for the digital current data according to the type of the switch machine to obtain at least one piece of channel digital current data;
classifying channel configurations for the fault type prediction model according to the type of the corresponding switch machine to obtain at least one channel fault type prediction model;
matching the at least one piece of channel digital current data to the at least one channel fault type prediction model to perform one-dimensional convolutional neural network edge computing to obtain fault type prediction data of the switch machine.

8. The method as claimed in claim 7, wherein the type of the switch machine is a type classified according to the device parameters of the switch machine.

9. A model deployment method, which is executed by a service end of a switch machine monitoring system and comprises: acquiring training samples, wherein the training samples comprise switch machine current data collected by an edge collection end of the switch machine monitoring system and corresponding fault type classification tags of the switch machine (S210);
performing classification training based on the training samples to obtain a fault type prediction model (S220);
sending the fault type prediction model to the edge collection end to perform a fault type prediction model deployment (S230).

10. An electronic device, comprising one or more processing units, a communication interface, a memory and a communication bus, and one or more programs, wherein the one or more processing units, communication interface and memory realize communication among them over the communication bus, and one or more programs are stored in the memory and are configured to be executed by the one or more processing units to execute the method as claimed in any of claims 1 to 9.

11. A model deployment apparatus, configured at a service end of a switch machine monitoring system and comprising:
a sample acquisition module (610), configured to acquire training samples, the training samples comprising switch machine current data collected by an edge collection end of the switch machine monitoring system and corresponding fault type classification tags of the switch machine;
a model training module (620), configured to perform classification training based on the training samples to obtain a fault type prediction model;
a model sending module (630), configured to send the fault type prediction model to the edge collection end to perform a fault type prediction model deployment.

12. A fault prediction apparatus, configured at an edge collection end of a switch machine monitoring system and comprising:
a model deployment module (710), configured to deploy a fault type prediction model acquired from a service end of the switch machine monitoring system, wherein the fault type prediction model is trained based on training samples, and the training samples comprise switch machine current data collected by the edge collection end and corresponding fault type classification tags of the switch machine;
a prediction module (720), configured to perform edge computing for the collected switch machine current data based on the fault type prediction model to obtain fault type prediction data of the switch machine.

13. A storage medium, the storage medium containing a stored program, wherein the program controls execution of the method as claimed in any of claims 1 to 9 by the device comprising the storage medium when running.

14. A computer program product, the computer program product being tangibly stored in a computer-readable medium and comprising computer-readable instructions, and the computer-readable instructions allowing at least one processing unit to execute the method as claimed in any of claims 1 to 9 when executed.
